# EUROPEAN PATENT SPECIFICATION

(11) **EP 3 839 120 B1**
(45) Date of publication and mention of the grant of the patent: **30.04.2025**
(21) Application number: 20210075.6
(22) Date of filing: 26.11.2020
(51) Int. Cl.: B32B 5/02, D04H 1/64, B32B 5/26, D01F 4/00, D04H 1/72, D06N 3/00, B32B 5/12, B32B 7/12, B32B 21/10, B32B 9/00, B32B 9/04, B32B 21/14, B32B 27/12

(54) **GELATIN-BASED NANOFIBROUS NON-WOVEN MATERIAL**
NANOFASERVLIESMATERIAL AUF GELATINEBASIS
MATÉRIAU NANOFIBREUX NON TISSÉ À BASE DE GÉLATINE

(30) Priority: 27.11.2019 US 201962941168 P
(43) Date of publication of application: 23.06.2021
(73) Proprietor: Gelatex Technologies OÜ, 13811 Tallinn (EE)
(72) Inventor: Martens, Märt-Erik, 10920 Tallinn (EE); Llisson, Mihkel, 50408 Tartu (EE); Laasfeld, Tõnis, 50408 Tartu (EE); Metsik, Jörgen, 13520 Tallinn (EE); Mäeorg, Uno, 50411 Tartu (EE)
(74) Representative: Aaltonen, Janne Lari Antero

(56) References cited:
- EP-A1- 1 022 031
- EP-A1- 3 205 754
- WO-A1-2005/054553
- WO-A1-2016/073453
- WO-A2-2007/122232
- CN-A- 105 013 012
- US-A- 3 607 609
- RATANAVARAPORN J ET AL: "Influences of physical and chemical crosslinking techniques on electrospun type A and B gelatin fiber mats", INTERNATIONAL JOURNAL OF BIOLOGICAL MACROMOLECULES, ELSEVIER BV, NL, vol. 47, no. 4, 1 November 2010 (2010-11-01), pages 431 - 438, XP027289309, ISSN: 0141-8130, [retrieved on 20100714]
- CUMMING MATHEW H ET AL: "Intra-fibrillar citric acid crosslinking of marine collagen electrospun nanofibres", INTERNATIONAL JOURNAL OF BIOLOGICAL MACROMOLECULES, ELSEVIER BV, NL, vol. 114, 3 April 2018 (2018-04-03), pages 874 - 881, XP085398449, ISSN: 0141-8130, DOI: 10.1016/J.IJBIOMAC.2018.03.180
- JONG HYUN KO ET AL: "Characterization of cross-linked gelatin nanofibers through electrospinning", MACROMOLECULAR RESEARCH, vol. 18, no. 2, 1 February 2010 (2010-02-01), KR, pages 137 - 143, XP055349803, ISSN: 1598-5032, DOI: 10.1007/s13233-009-0103-2
- RICKMAN JESSICA ET AL: "Rotation-assisted wet-spinning of UV-cured gelatin fibres and nonwovens", JOURNAL OF MATERIAL SCIENCE, KLUWER ACADEMIC PUBLISHERS, DORDRECHT, vol. 54, no. 14, 16 April 2019 (2019-04-16), pages 10529 - 10547, XP036770159, ISSN: 0022-2461, [retrieved on 20190416], DOI: 10.1007/S10853-019-03498-5
- FIORANI ANDREA ET AL: "Comparative performance of collagen nanofibers electrospun from different solvents and stabilized by different crosslinkers", JOURNAL OF MATERIALS SCIENCE: MATERIALS IN MEDICINE, SPRINGER NEW YORK LLC, UNITED STATES, vol. 25, no. 10, 25 March 2014 (2014-03-25), pages 2313 - 2321, XP035394816, ISSN: 0957-4530, [retrieved on 20140325], DOI: 10.1007/S10856-014-5196-2
- TORRES-GINER SERGIO ET AL: "Comparative Performance of Electrospun Collagen Nanofibers Cross-linked by Means of Different Methods", ACS APPLIED MATERIALS & INTERFACES, vol. 1, no. 1, 24 November 2008 (2008-11-24), US, pages 218 - 223, XP055783794, ISSN: 1944-8244, DOI: 10.1021/am800063x
- ZHANG Y Z ET AL: "Crosslinking of the electrospun gelatin nanofibers", POLYMER, ELSEVIER SCIENCE PUBLISHERS B.V, GB, vol. 47, no. 8, 5 April 2006 (2006-04-05), pages 2911 - 2917, XP028060910, ISSN: 0032-3861, [retrieved on 20060405], DOI: 10.1016/J.POLYMER.2006.02.046
- YASUHIRO NAKA ET AL: "2H11 Improvement of physical stability by collagen fiber cross-linking and application to 3D tissue construction", PREPRINTS OF THE 67TH SPSJ ANNUAL MEETING, SOCIETY OF POLYMER SCIENCE, JAPAN, JP, vol. 67, no. 1, 30 April 2018 (2018-04-30), pages 1, XP009523714

## Description

### TECHNICAL FIELD

The present disclosure relates generally to biodegradable and eco-friendly nanofibrous materials; and more specifically, to methods for producing nanofibrous non-woven material, nanofibrous non-woven materials and products produced thereof.

### BACKGROUND

As long as people eat meat, there are animal leftovers that should be used, but unfortunately even now so much of is not. In fact, just in the EU over 5 million tons of animal waste is simply burnt. So it makes sense to use that but it should be just used without creating pollution. However, from 2 billion square meters of leather produced every year in the world 95% is made using toxic chemicals that cause cancer and pollute waters. Even if eco-friendly alternatives to it exist, all those solutions are just too slow to produce, expensive and therefore not suitable for mass-production. In order to make a change, eco-friendly materials need to be accessible and affordable to everyone. However, there was still an unmet demand for materials that would at the same time be eco-friendly, affordable and easily scalable.

Conventionally, animal hides and natural fibers such as cotton or silk have been processed and used as textiles, packaging materials and for aesthetic purposes. However, the processing of animal hides to produce leather has been a major cause of environmental pollution, wildlife endangerment and several ethical concerns. With advancements in technology, synthetic fibers such as polyester and nylon have become widely popular as such synthetic fibers are easy to manufacture on a large scale. However, such synthetic fibers pose ecological concerns as such fibers are manufactured using non-renewable resources and are non-biodegradable.

In recent times, gelatin and non-woven materials produced therefrom have emerged as a promising bio-degradable material for fabric production and applications in pharmaceuticals, food industry and medical applications. Gelatin is a protein that is produced by irreversible hydrolysis of collagen. Collagen itself is an abundant protein in connective tissues, making up about one third of the total protein content in mammalian organisms. Collagen and gelatin can be both considered as residual products while they are produced during the recycling process of organic waste received from animals (e.g. bones, skin and other low-value parts). Although non-woven materials produced from gelatin possess high surface area and high porosity, such materials have poor mechanical properties and cannot be employed for applications requiring durability and strength of the material. Furthermore, non-woven materials produced from gelatin have high moisture absorption and moisture retention properties. There are known methods to produce nanofibers from gelatin - electrospinning, drawing, blow-spinning, thermal-induced phase separation, template synthesis. Gelatin nanofibers are produced as a non-woven material. The non-woven materials produced from known techniques are not durable.

There is a vast problem in textile industry as majority of fibers are produced from synthetic polymers similarly to leather replacement products. Most of these synthetic polymers are made from crude oil that is non-renewable resource. There is a lack of materials that are made from renewable resources that could be produced in large scale. Gelatin is a substance derived from the low-valued waste of livestock industry by-products. There is still a lot of this waste that is just burnt that could be turned to gelatin. Gelatin can be easily turned into nanofibers with a variety of methods such as electrospinning, thermal-induced phase separation, drawing etc. Non-woven material that is made from these fibers possess high surface area and high porosity but has poor mechanical properties.

RATANAVARAPORN J ET AL: "Influences of physical and chemical crosslinking techniques on electrospun type A and B gelatin fiber mats", INTERNATIONAL JOURNAL OF BIOLOGICAL MACROMOLECULES, ELSEVIER BV, NL discloses chemical and physical crosslinking of gelatin fibers.

Therefore, in light of the foregoing discussion, there exists a need to overcome the aforementioned drawbacks associated with the production of non-woven materials from gelatin nanofibers.

### SUMMARY

The present disclosure seeks to provide a method for producing a nanofibrous non-woven material. The present disclosure also seeks to provide a nanofibrous non-woven material comprising cross-linked gelatin nanofibers. An aim of the present disclosure is to provide a solution that overcomes at least partially the problems encountered in prior art and to provide the solution for making leather-like material from gelatin.

In a first aspect, the present disclosure provides a method for producing a nanofibrous non-woven material, the method comprising producing gelatin nanofibers; producing a nanofibrous material using the produced gelatin nanofibers; and filling voids between gelatin nanofibers in the gelatin nanofibrous material by treating the nanofibrous material by physical crosslinking for forming bonds in the nanofibrous material, wherein treating by the physical crosslinking comprises treating by a physical stimuli selected from a physical stimuli group comprising electron beam irradiation, plasma treatment, thermal treatment for forming covalent bonds between the gelatin nanofibers in the nanofibrous non-woven material and to obtain the nanofibrous non-woven material. In a second aspect, the present disclosure provides a nanofibrous non-woven material comprising cross-linked gelatin nanofibers and filled voids between the cross-linked gelatin nanofibers. In some additional embodiments, the present disclosure provides a laminated material comprising of material described above and the substrate that can be wood, cotton.

Embodiments of the present disclosure substantially eliminate or at least partially address the aforementioned problems in the prior art, and enables high tensile strength, abrasion resistance and resistance to the environment in the nanofibrous non-woven material. The present disclosure provides a method for producing a nanofibrous gelatin-based nanofibrous non-woven material, wherein adhesion between the gelatin nanofibers is significantly improved using the crosslinking agent, thereby producing a material with high water-resistance and improved mechanical properties that is strong enough to be used in applications such as textile, fashion, interior design, automotive, packaging.

The embodiments further enable the faster production and improve material durability, because gelatin fibers produced by known methods (e.g. electrospinned material) was too thin and production too slow, expensive and energy demanding. As a result, the embodiments of the present disclosure good for more than just making an eco-friendly material and enable to make nanofibrous materials faster than other current technologies. I.e. the material produced according to the present disclosure is an airy fibrous gelatin-based material that can be easily produced on an industrial scale and have potential applications in the textile industry, interior design, drug testing, dentistry, wound care or even filtration.

Filling the voids between fibers in gelatin nanofibrous mesh enchases mechanical properties of the material. Other methods to enhance mechanical properties of the nanofibrous non-woven material are crosslinking with dangerous reactive chemicals. The embodiments enhance properties of the nanofibrous non-woven material and enable to use this material in textile, automotive, interior, fashion or packaging application.

Additional aspects, advantages, features and objects of the present disclosure would be made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

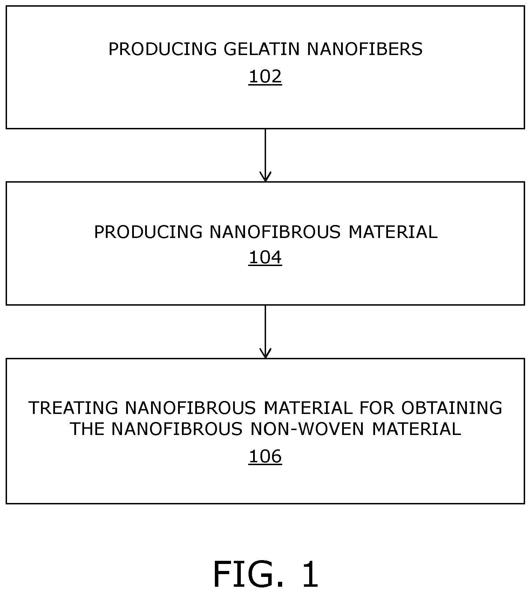

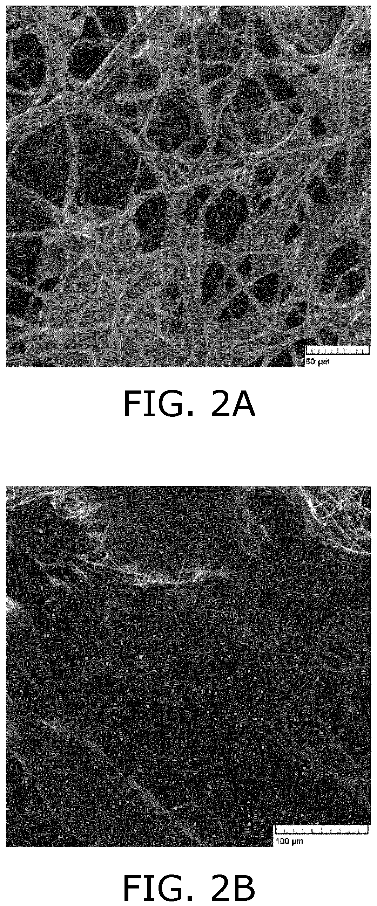

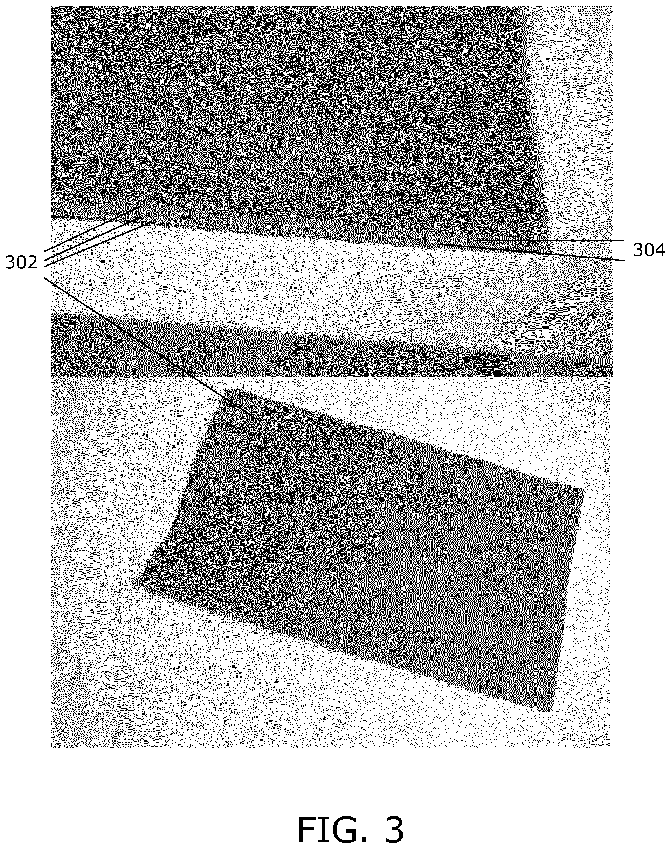

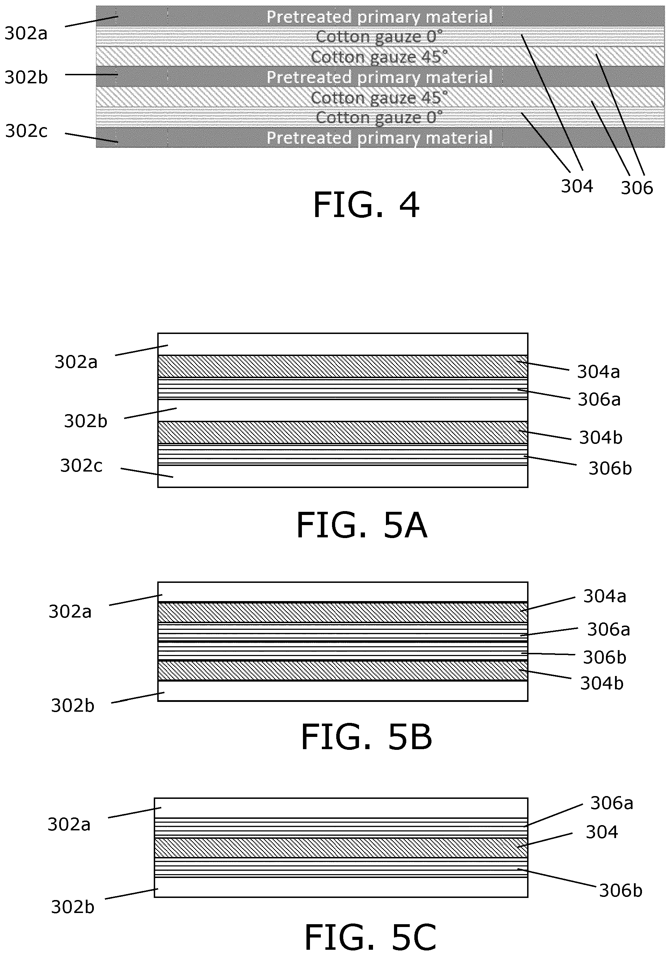

The summary above, as well as the following detailed description of illustrative embodiments, is better understood when read in conjunction with the appended drawings. Embodiments of the present disclosure will now be described, by way of example only, with references to the following illustrations wherein:
Figure FIG. 1 is a flow chart depicting steps of a method for producing a nanofibrous non-woven material, in accordance with an embodiment of the present disclosure;
Figures FIG. 2A and FIG. 2B are scanning electron microscope (SEM) images of the nanofibrous non-woven material, in accordance with an embodiment of the present disclosure;
Figure FIG. 3 illustrates an example of laminated material having different layers according to an embodiment of the preset disclosure;
Figure FIG. 4 illustrates a schematic diagram of lamination to enhance mechanical properties of materials;
Figures FIG. 5A, FIG. 5B and FIG. 5C are schematic illustrations of laminated nanofibrous non-woven materials, in accordance with various implementations of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

Based on the physical and chemical properties of both fibers and the primary material, the following assumptions are considered for the development of after-treatment technologies: (i) As the single fibers of gelatin have high tensile strength and elastic modulus, the poor mechanical properties of the material are resulted from weak interactions between the fibers. Therefore, to improve mechanical properties of the material, it is advantageous to enhance interactions between the fibers using either physical or chemical methods. (ii) Considering the high hydrophilicity of gelatin fibers, it is beneficial to mask its polar functional groups either by chemical derivatization or physical coating with a hydrophobic agent in order to improve its water-resistant properties. (iii) The empty space between the fibers act as capillaries and therefore absorb water due to capillary forces. Therefore, it is useful to block them either completely or partially. All the mentioned drawbacks can be mitigated by either chemical or physical crosslinking methods.

Physical crosslinking serves the same purpose as chemical crosslinking, two different approaches are available: (i) New covalent bonds between fiber and crosslinker are not formed. Rather, the crosslinker binds with the fiber by other interactions, such as dispersion, dipole-dipole, dipole-induced dipole forces and by hydrogen bonding. Crosslinker may be any polymer (polyethylene, polypropylene, polysiloxane, polyurethane, polyvinyl alcohol, polyvinyl acetate, polyethylene glycol, polyamide or any co-polymer) which can be incorporated into fibrous gelatin matrix. (ii) New covalent bonds between fibers are formed, but only a physical stimulus is used to form these. Such physical stimuli are e.g. electron beam irradiation, plasma treatment, thermal treatment.

In a first aspect, the present disclosure provides a method for producing a nanofibrous non-woven material, the method comprising producing gelatin nanofibers; producing a nanofibrous material using the produced gelatin nanofibers; and treating the nanofibrous material by a crosslinking agent for forming adhesion bonds in the nanofibrous material and to obtain the nanofibrous non-woven material.

In a second aspect, the present disclosure provides a nanofibrous non-woven material comprising cross-linked gelatin nanofibers. In another embodiment, the present disclosure provides a laminated material comprising of material described above in the embodiments of the second aspect and the substrate that can be wood, cotton.

The present disclosure provides a method of producing nanofibrous non-woven material and a nanofibrous non-woven material comprising cross-linked gelatin nanofibers. The nanofibrous non-woven material produced using the method described herein has high tensile strength, abrasion resistance, tear strength, color fastness, resistance to surface wetting, static air permeability, resistance by ignition to match, resistance of elongation at rupture and resistance to the environment. Notably, the adhesion between the gelatin nanofibers is significantly improved using the crosslinking agent, thereby producing a material with high water-resistance and improved mechanical properties that is strong enough to be used in applications such as textile, fashion, interior design, automotive, packaging. Moreover, low-valued waste of livestock industry by-products that would otherwise be burnt and contribute to environmental pollution can be used to produce gelatin nanofibers. Furthermore, the method of the present disclosure is efficient, economically viable and can be scaled for mass-production. The embodiments according to the present disclosure enable to make gelatin-based nanofibrous material, which help to reduce abundant waste of leather and meat industries while at the same time solving the problem of mass-fashion and automotive brands not having eco-friendly materials available in mass-scale. As a result, the embodiments of the nanofibrous non-woven material according to the present disclosure enable a material that is unique on its own, has a texture similar to leather or suede and suitable for similar applications.

The method comprises producing gelatin nanofibers. Notably, gelatin is a protein that is produced by irreversible hydrolysis of collagen. Collagen is an abundant protein in connective tissues of animals, making up about one third of the total protein content in mammalian organisms. Collagen and gelatin can be both considered as residual products while they are produced during the recycling process of organic waste received from animals, for example bones, skin and other low-value parts. Subsequently, the gelatin obtained thereby is processed using techniques such as electrospinning, drawing, blow-spinning, thermal-induced phase separation, template synthesis to produce the gelatin nanofibers. Wet spinning is commonly used that involves the extrusion of a protein solution through a spinneret into an acid-salt coagulating bath, which usually contains aqueous ammonium sulfate, acetic acid, isopropanol, or acetone. Alternatively, dry spinning comprises extrusion into an evaporative atmosphere. It will be appreciated that gelatin is generally derived from low-valued waste of livestock industry by-products that are generally burnt leading to release of toxic pollutants into environment. Beneficially, use of such livestock industry by-products for production of gelatin thereby reduces environmental pollution and provides sustainable, bio-degradable nanofibers.

Optionally, a weighted average diameter of the gelatin nanofibers is 20 nm-2000 nm. Notably, the diameter of the gelatin nanofibers is a function of the process used to obtain the gelatin nanofibers from gelatin. Herein, the weighted average diameter is calculated based on diameter of each of the gelatin nanofibers obtained. It will be appreciated that the diameter of the gelatin nanofibers may vary. Therefore, the weighted average diameter is calculated as an average of the product of different diameters of nanofibers obtained and number of each of the nanofibers of different diameters. The weighted average diameter of the gelatin nanofibers may be, for example, from 20 nm (nanometers), 30 nm, 40 nm, 50 nm, 60 nm, 70 nm, 80 nm, 90 nm, 0.1 µm (micrometers), 0.2 µm, 0.3 µm, 0.4 µm, 0.5 µm, 0.6 µm, 0.7 µm, 0.8 µm, 0.9 µm or 1 µm up to 50 nm, 60 nm, 70 nm, 80 nm, 90 nm, 0.1 µm, 0.2 µm, 0.3 µm, 0.4 µm, 0.5 µm, 0.6 µm, 0.7 µm, 0.8 µm, 0.9 µm, 1 µm, 1.5 µm or 2 µm.

The method comprises producing a nanofibrous material using the produced gelatin nanofibers. The gelatin nanofibers are bonded to form the nanofibrous material. Notably, techniques such as mechanical bonding, chemical bonding, thermal bonding or a combination thereof may be employed to produce the nanofibrous material from the gelatin nanofibers. For instance, in mechanical bonding, physical entanglement of the nanofibers is performed to produce the nanofibrous material. It will be appreciated that due to high hydrophilicity of the gelatin nanofibers and presence of empty spaces (namely, voids) between the nanofibers, the nanofibrous material has high moisture-retention properties. Therefore, such empty spaces between the nanofibers are either partially or completely filled subsequently to improve water-resistant properties of the nanofibrous material.

The method comprises treating the nanofibrous material by a physical crosslinking for forming bonds in the nanofibrous material and to obtain the nanofibrous non-woven material. The singular gelatin nanofibers have high tensile strength and elastic modulus. However, the nanofibrous material obtained using such gelatin nanofibers has poor mechanical properties due to weak interactions between the nanofibers. Therefore, interaction and adhesion between the fibers needs to be improved to enhance the mechanical properties of nanofibrous material. Herein, the term *"crosslinking agent"* refers to a process or a chemical compound that improves adhesion between the gelatin nanofibers of the nanofibrous material. Notably, in order to improve the adhesion between the gelatin nanofibers, the crosslinking agent enhances interaction by forming adhesion bonds between the gelatin nanofibers using a process or may provide the chemical compound that may interlink the gelatin nanofibers with each other. Furthermore, by improving the adhesion between the gelatin nanofibers, the crosslinking agent enables to fill interfibrous voids in the nanofibrous non-woven material. Beneficially, water-resistant properties of the nanofibrous non-woven material are significantly improved by the crosslinking agent as the interfibrous voids act as capillaries and absorb water by capillary action. More specifically, forming adhesion bonds in the nanofibrous material enables to enhance interactions between the gelatin fibers and to improve fibers adhesion to each other to improve mechanical properties of the non-woven nanofibrous material. Further, forming the bonds enables to fill voids between the fibers in the non-woven nanofibrous material and thus to reduce water absorption caused by the empty spaces between the fibers. The empty space between the fibers act as capillaries and therefore absorb water due to capillary forces. Therefore, by filing the empty spaces by crosslinking reactions it enables to block the capillary forces.

Optionally, treating by the crosslinking agent comprises treating by physical crosslinking agent selected from a physical stimuli group comprising electron beam irradiation, plasma treatment, thermal treatment for forming covalent bonds between the gelatin nanofibers in the nanofibrous non-woven material. Notably, the physical crosslinking forms covalent bonds amongst the gelatin nanofibers in the nanofibrous non-woven material. The electronic beam irradiation enables free radical formation in the nanofibrous non-woven material, wherein two free radicals induced by irradiation combine to form a covalent bond, thereby improving adhesion between the gelatin nanofibers. Similarly, plasma treatment induces crosslinking between the gelatin nanofibers and improves structural and morphological stability of the nanofibrous non-woven material. In thermal treatment, the nanofibrous material is heated at controlled temperatures for predefined time periods to obtain desired crosslinking between the gelatin nanofibers. Beneficially, the physical stimuli enable improvement of mechanical properties of nanofibrous non-woven material using a simplified and efficient process.

Optionally, the method further comprises laminating at least one layer of the nanofibrous non-woven material with at least one layer of a reinforcing material, wherein the reinforcing material is at least one of wood, plywood, plastic, ceramics, cotton, cotton gauze, stronger woven material. In the embodiments the nanofibrous non-woven material further comprises at least one layer of reinforcing material as lamination.

In different further embodiment the nanofibrous non-woven material comprising at least one layer of reinforcing material as lamination may in addition comprise one or more additional layers of nanofibrous non-woven material. In such embodiments the at least one layer of reinforcing material may be glued between two layers of the nanofibrous non-woven material. In other embodiments the at least one layer of reinforcing material and two or more nanofibrous non-woven material may be glued in turn, wherein between each two layers of nanofibrous non-woven material there is one or more layers of reinforcing materials.

The thickness of the nanofibrous non-woven material comprising at least one layer of reinforcing material as lamination range from 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.5, 6.0, 6.5, 7.0, 7.5, 8.0, 8.5, 9.0, 9.5 or 10 mm up to .6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.3, 6.9, 7.2, 7.5, 7.8, 8.1, 8.4, 8.7, 9.0, 9.3, 9.6, 9.9 or 10.2 mm, which is suitable for the wide range of applications and products according to the claim 7. Depending on the number of reinforcing material layers and the number of the nanofibrous non-woven material layers the better properties can be achieved. E.g. Laminated material comprising three non-woven material layers laminated with 4 cotton gauge reinforcing material layers enables to provide end material having thickness 2 - 4 mm which is suitable for the wide range of applications and products according to the claim 15.

The at least one layer of reinforcing material layer may be at an angle of 0 - 90° with respect to the nanofibrous non-woven material layer. In an example layer of reinforcing material layer may be at an angle 0° or 45°, or in another example, wherein the nanofibrous non-woven material comprises more than one reinforcing material layers then at least one reinforcing material layer may be at an angle 0° and at least one reinforcing material layer may be at an angle 45°. Using the reinforcing material layers at different angles enables to improve further the mechanical properties of the nanofibrous non-woven material.

The present disclosure also relates to the nanofibrous non-woven material as described above. Various embodiments and variants disclosed above, with respect to the aforementioned first aspect, apply mutatis mutandis to the nanofibrous non-woven material.

Optionally, the nanofibrous non-woven material comprises the gelatin nanofibers treated by a first physical crosslinking agent selected from a physical stimuli group comprising electron beam irradiation, plasma treatment, thermal treatment. This enables to form new covalent bonds between gelatin fibers which is helps to improve the adhesion between the gelatin fibers of nanofibrous non-woven material and thus improve the mechanical properties of the nanofibrous non-woven material.

The present disclosure provides a material comprising a nanofibrous non-woven material produced by using the method for producing a nanofibrous non-woven material for making a non-woven leather-like material for textile, fashion, interior design, automotive, packaging applications; biomaterial for dentistry, wound-care, cell cultivation applications; air filtration products. Notably, the material comprising a nanofibrous non-woven material provides an eco-friendly textile alternative for fashion or interior design purposes with a texture similar to suede or leather. Furthermore, the material may be used as a three-dimensional scaffolding for cell cultivation, for example, for growing liver cells than can be used for cancer drug testing. Moreover, the material may be used as a biomaterial for dentistry to support bone regrowth after tooth extraction.

### Lamination

Two layers of described material are laminated between a layer of reinforcing material as illustrated in figures FIG. 4 and FIG.5A-FIG.5B. This is achieved with heat (20-200 °C), pressure, adhesive layer, needle punching or combination of said methods.

Material is laminated on rigid surface (wood, plywood, plastic, ceramics) for decorative purposes. This is achieved with heat (20-200 °C), pressure, adhesive layer, needle punching or combination of said methods. Lamination is carried out to enhance end materials mechanical properties. In that case material described above acts as a visual/decorative layer as substrate will determine mechanical properties of the end material.

### Example of products

The present disclosure is focused on making eco-friendly textile for fashion or interior design that compared to other materials is now the most similar to suede or leather. Also, the nanofibrous mesh that is created with the described process can be used also in various other applications, such as: (1) 3d scaffold for cell cultivation (for instance for growing liver cells on it that can then be used for cancer drug testing); (2) biomaterial for dentistry to help the bone to re-grow after tooth extraction; (3) wound-care; (4) air filtration.

The embodiments of the leather-like material according to the present disclosure have been tested in textile applications and accessories of the leather-like material have been produced. Different measurements to determine physical properties of the leather-like material have been carried out. For example following tests have been carried out: Tear Strength (ISO 13937-2:2000) - 4,02 to 6,60 N; Tensile Strength (EN ISO 13934-1:2013) 99,78 to 590 N; Abrasion/Martindale test (ISO 12947-1:2001 and ISO 12947-4:2001) - up to 50 000 cycles.

More detailed examples of the test results of the nanofibrous non-woven material according the embodiments of the present disclosure are described in the table as follows.

| **TESTED PROPERTY** | **TEST METHOD** | **Unit** | **DIFFERENT SAMPLES RESULTS** | | |
|---|---|---|---|---|---|
| | | | **treatment A** | **treatment B** | **treatment C** |
| Tear Strength | ISO 13937-2:2000 | Mean Peak Force (N) | 6.60 | 4.02 | 5.3 |
| Tensile Strength | EN ISO 13934-1:2013 | Force at Rupture (N) | 99.78 | 287.11 | 590 |
| Elongation | EN ISO 13934-1:2013 | Elongation at Rupture (%) | 7.53 | 9.48 | 11 |
| Abrasion/ Martindale | ISO 12947-1:2001; ISO 12947-4:2001 9 kPa pressure load; temperature 22.0°C; air humidity 31% | number of cycles and visual look | 5000 cycles and no change | 1000 cycles leave major mark, 3000 cycles break the surface totally | one sample: NO change in 50000 cycles; most samples surface slightly damaged and some fibers out at 5000 cycles |
| Flexing endurance | | | | no test done but by hand has cracks after ca 25 cycles | no official test but by hand does not change after over 150 cycles |
| Colour fastness to rubbing cycles^{©}-change colour and staining* | ISO 105-X12: 2016 (Temperature 22°C; Air humidity 31%); dry and wet | 5 score evaluation (5 - no change) | | dry: 2; wet 2/3 | dry: 4/5; wet 4 |
| Colour fastness to washing | ISO 105-C06: 2010. 5 | score evaluation (5 - no change) | | wool - 5; | wool - 5; |
| | The test was performed at 40°C. | | | acryl- 5; | acryl- 5; |
| | | | | polyester - 5; | polyester-4/5; |
| | Duration of washing cycle 30 min. 10 steel balls in the washing container. 150ml of washing solution | | | polyamid - 5; | polyamid-4/5; |
| | | | | cotton - 5; | cotton-4/5; |
| | | | | acetate - 5 | acetate - 4 |
| Colour fastness to perspiration | ISO 105-E04; both alkaline and acidic tests were conducted and colour fastness where tested with different textiles to see whether colour passes on those textiles. | 5 score evaluation (5 - no change) | | Alkaline vs acidic: wool-4/5vs 3/4 acryl- 4/5 vs 4 polyester-(4)/5vs(4)/5 polyamid-4vs3 cotton-4/5vs4 acetate-4vs3/4 | |
| Determination of resistance to surface wetting (spray test) | ISO 4920:2012 Temp.: 22°C; Air humidity 35%; Water temperature 26.0°C; Amount of water s 250ml | 5 score evaluation (5 - no change) | | 0-1 (material surface gets wet, but water does not go through the material) | 0-1 (material surface gets wet, but water does not go through the material) |
| Static Air Permeability | Instrument: FX 3300 LabAir IV. Serial No.: 720. | l/m2/s | | Average: 9.12 I/m2/s; Minimum: 2.59 I/m2/s; Maximum: 18.0 I/m2/s; CV: 46.4 % | Averages (l/m2/2): |
| | | | | | sample 1 - 11.6 |
| | | | | | sample 2 - 14.9 |
| | Settings | | | | sample 3 - 10.7 |
| | Test pressure: 100 Pa | | | | sample 4 - 11.9 |
| | Test area: 20 cm2 | | | | sample 5 - 5.28 |
| | Nom/Min/Max:-1.00 /-1.00/-1.00 l/m2/s | | | | |
| Resistance by ignition to match | Standard EN ISO 6940:2004 | ignites or not | | Ignition of 10 sec; 3 out of 8 ignites, 5 don't. In ignition of 15 sec probability is much bigger. | Out of 8 samples 2 ignite after ignition of 11 seconds. |

An example material according to the present disclosure comprises biopolymer nanofibers that are bonded with adhesive and finally laminated with reinforcing layer. A diameter of the biopolymer fibers may be 20nm-2µm and treated with adhesive to enhance materials tensile strength, abrasion resistance and resistance to environment.

### DETAILED DESCRIPTION OF THE DRAWINGS

Referring to FIG. 1, there is shown a flow chart depicting steps of a method for producing a nanofibrous non-woven material, in accordance with an embodiment of the present disclosure, wherein the method comprises producing gelatin nanofibers at step **102,** producing a nanofibrous material using the produced gelatin nanofibers at step **104,** treating the nanofibrous material by a crosslinking agent for forming adhesion bonds in the nanofibrous material and to obtain the nanofibrous non-woven material **106.** The steps **102, 104** and **106** are illustrative and other alternatives can also be provided where one or more steps are added, removed, or are provided in a different sequence without departing from the scope of the claims herein.

Figures FIG. 2A and FIG. 2B show scanning electron microscope (SEM) images of the nanofibrous non-woven material, in accordance with an embodiment of the present disclosure, wherein gelatin fibers are covered by silicone treating. FIG. 2A illustrates the gelatin fibers covered by silicone treating of the nanofibrous non-woven material with respect to a scale of 50 µm, whereas FIG. 2B illustrates the gelatin fibers covered by silicone treating of the nanofibrous non-woven material with respect to a scale of 100 µm. Notably, in FIG. 2A and FIG. 2B crosslinking is observed between the gelatin nanofibers in the nanofibrous non-woven material.

Figure Fig. 3 illustrates an example of laminated nanofibrous non-woven material according to an embodiment of the preset disclosure, wherein the laminated nanofibrous non-woven material having nanofibrous non-woven material layers **302** (i.e. darker layers) and reinforcing material layers **304, 306** (i.e. lighter layers).

Figure Fig. 4 illustrates another example of laminated nanofibrous non-woven material according to an embodiment of the present disclosure and illustrates a bidirectionally oriented material layers used to reinforce the nanofibrous non-woven material, wherein the laminated nanofibrous non-woven material comprises a first nanofibrous non-woven material layer of pretreated primary material **302a,** a second nanofibrous non-woven material layer of pretreated primary material **302b,** a third nanofibrous non-woven material layer of pretreated primary material **302c,** a first layer of reinforcing material **304** and a second layer of reinforcing material **306.** According to the embodiment the first layer of reinforcing material **304** and the second layer of reinforcing material **306** form the bidirectionally oriented material layers comprising both cotton gauze, wherein orientation of the first layer of reinforcing material **304** is aligned at an angle of 0° and orientation of the second layer of reinforcing material **306** is aligned at an angle of 45°.

Referring to figures FIG. 5A, FIG. 5B and FIG. 5C, there are shown schematic illustrations of laminated nanofibrous non-woven materials, in accordance with various implementations of the present disclosure, comprising at least one nanofibrous non-woven material layer **302** and one or more lamination layers for reinforcing the material.

In figure FIG. 5A there is illustrated an example of laminated nanofibrous non-woven material comprising a first nanofibrous non-woven material layer **302a,** a second nanofibrous non-woven material layer **302b,** a first layer of reinforcing material **304a** and a second layer of reinforcing material **306a** glued between the first nanofibrous non-woven material layer **302a** and the second nanofibrous non-woven material layer **302b,** wherein the first layer of reinforcing material **304a** is at an angle of 45° with respect to the first nanofibrous non-woven material layer **302a** and the second layer of reinforcing material **306a,** and the second nanofibrous non-woven material layer **306a** is at an angle of 0° with respect to the first nanofibrous non-woven material layer **302a** and the first layer of reinforcing material **304a,** and wherein laminated nanofibrous non-woven material further comprises a third nanofibrous non-woven material layer **302c,** third layer of reinforcing material **304b** and a fourth layer of reinforcing material **306b** glued between the second nanofibrous non-woven material layer **302b** and the third nanofibrous non-woven material layer **302c** and wherein the third layer of reinforcing material **304b** is at an angle of 45° with respect to the second nanofibrous non-woven material layer **302b** and the fourth layer of reinforcing material **306b,** and the fourth layer of reinforcing material **306b** is at an angle of 0° with respect to the third nanofibrous non-woven material layer **302c** and the third layer of reinforcing material **304b.**

In figure FIG. 5B there is illustrated another example of laminated nanofibrous non-woven material comprising a first nanofibrous non-woven material layer **302a,** a second nanofibrous non-woven material layer **302b,** and a first layer of reinforcing material **304a,** a second layer of reinforcing material **306a,** a third layer of reinforcing material **306b** and a fourth layer of reinforcing material **304b** glued between the first nanofibrous non-woven material layer **302a** and the second nanofibrous non-woven material layer **302b,** wherein the first layer of reinforcing material **304a** and the fourth layer of reinforcing material **304b** are correspondingly at an angle of 45° with respect to the first nanofibrous non-woven material layer **302a** and the second nanofibrous non-woven material layer **304b,** and the second layer of reinforcing material **306a** and third layer of reinforcing material **306b** between the first and fourth layers of reinforcing material **304a, 304b** are at an angle of 0° with respect to the first and fourth layers of reinforcing material **304a, 304b.**

In figure FIG. 5C there is illustrated yet another example of laminated nanofibrous non-woven material comprising a first nanofibrous non-woven material layer **302a,** a second nanofibrous non-woven material layer **302b,** and a first layer of reinforcing material **304,** a second layer of reinforcing material **306a,** a third layer of reinforcing material **306b** glued alternately between the first nanofibrous non-woven material layer **302a** and the second nanofibrous non-woven material layer **302b,** wherein the second layer of reinforcing material **306a** and the third layer of reinforcing material **306b** are correspondingly at an angle of 0° with respect to the first nanofibrous non-woven material layer **302a** and the second nanofibrous non-woven material layer **304b,** and the first layer of reinforcing material **304** is an angle of 45° with respect to the second layer of reinforcing material **306a** and the third layer of reinforcing material **306b.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for producing a nanofibrous non-woven material, the method comprising
- producing gelatin nanofibers;
- producing a nanofibrous material using the produced gelatin nanofibers; and
- filling voids between gelatin nanofibers in the gelatin nanofibrous material by treating the nanofibrous material by physical crosslinking for forming covalent bonds in the nanofibrous material, wherein treating by the physical crosslinking comprises treating by a physical stimuli selected from a physical stimuli group comprising electron beam irradiation, plasma treatment, thermal treatment for forming covalent bonds between the gelatin nanofibers in the nanofibrous non-woven material, and to obtain the nanofibrous non-woven material.

2. The method according to any of the preceding claims, wherein the method further comprises laminating at least one layer of the nanofibrous non-woven material with at least one layer of a reinforcing material, wherein the reinforcing material is at least one of wood, plywood, plastic, ceramics, cotton, cotton gauze.

3. A nanofibrous non-woven material comprising cross-linked gelatin nanofibers and filled voids between the cross-linked gelatin nanofibers.

4. The nanofibrous non-woven material according to claim 3, wherein the nanofibrous non-woven material comprises the gelatin nanofibers treated by physical crosslinking, wherein for physical crosslinking a physical stimuli is selected from a physical stimuli group comprising electron beam irradiation, plasma treatment, thermal treatment.

5. The nanofibrous non-woven material according to any of the claims 3-4, wherein a weighted average diameter of the gelatin nanofibers is 20 nm-2000 nm.

6. The nanofibrous non-woven material of any of the claims 3-5, wherein the nanofibrous non-woven material further comprises at least one layer of reinforcing material as lamination.

7. A use of the nanofibrous non-woven material according to any of the claims 3-6 for making a non-woven leather-like material for textile, fashion, interior design, automotive, packaging applications; biomaterial for dentistry, wound-care, cell cultivation applications; air filtration products.

## Patentansprüche

1. Verfahren zum Produzieren eines nanofaserigen Vliesmaterials, das Verfahren umfassend
- Produzieren von Gelatinenanofasern;
- Produzieren eines nanofaserigen Materials unter Verwendung der produzierten Gelatinenanofasern; und
- Füllen von Hohlräumen zwischen Gelatinenanofasern in dem nanofaserigen Gelatinematerial durch Behandeln des nanofaserigen Materials durch eine physikalische Vernetzung zum Ausbilden kovalenter Bindungen in dem nanofaserigen Material, wobei das Behandeln durch die physikalische Vernetzung das Behandeln durch einen physikalischen Stimulus umfasst, der aus einer Gruppe physikalischer Stimuli ausgewählt ist, umfassend Elektronenstrahlbestrahlung, Plasmabehandlung, Wärmebehandlung zum Ausbilden kovalenter Bindungen zwischen den Gelatinenanofasern in dem nanofaserigen Vliesmaterial und um das nanofaserige Vliesmaterial zu erhalten.

2. Verfahren nach einem der vorstehenden Ansprüche, wobei das Verfahren ferner ein Laminieren von mindestens einer Schicht des nanofaserigen Vliesmaterials mit mindestens einer Schicht eines Verstärkungsmaterials umfasst, wobei das Verstärkungsmaterial mindestens eines von Holz, Sperrholz, Kunststoff, Keramik, Baumwolle oder Baumwollgaze ist.

3. Nanofaseriges Vliesmaterial, umfassend vernetzte Gelatinenanofasern und gefüllte Hohlräume zwischen den vernetzten Gelatinenanofasern.

4. Nanofaseriges Vliesmaterial nach Anspruch 3, wobei das nanofaserige Vliesmaterial die Gelatinenanofasern umfasst, die durch physikalische Vernetzung behandelt werden, wobei für die physikalische Vernetzung ein physikalischer Stimulus aus einer Gruppe physikalischer Stimuli ausgewählt wird, umfassend Elektronenstrahlbestrahlung, Plasmabehandlung und Wärmebehandlung.

5. Nanofaseriges Vliesmaterial nach einem der Ansprüche 3 bis 4, wobei der gewichtete Durchschnittsdurchmesser der Gelatinenanofasern 20 nm-2000 nm beträgt.

6. Nanofaseriges Vliesmaterial nach einem der Ansprüche 3 bis 5, wobei das nanofaserige Vliesmaterial ferner mindestens eine Schicht des Verstärkungsmaterials als Laminierung umfasst.

7. Verwendung des nanofaserigen Vliesmaterials nach einem der Ansprüche 3 bis 6 zum Herstellen eines lederähnlichen Vliesmaterials für Textil-, Mode-, Innenarchitektur-, Automobil- und Verpackungsanwendungen; Biomaterial für Zahnmedizin, Wundpflege, Zellkultivierungsanwendungen; Luftfilterprodukte.

## Revendications

1. Procédé de production d'un matériau non tissé nanofibreux, le procédé comprenant
- la production de nanofibres de gélatine ;
- la production d'un matériau nanofibreux à l'aide des nanofibres de gélatine produites ; et
- le remplissage de vides entre des nanofibres de gélatine dans le matériau nanofibreux de gélatine en traitant le matériau nanofibreux par réticulation physique pour former des liaisons covalentes dans le matériau nanofibreux, dans lequel le traitement par la réticulation physique comprend le traitement par un stimulus physique choisi dans un groupe de stimuli physiques comprenant une irradiation par faisceau d'électrons, un traitement par plasma, un traitement thermique permettant de former des liaisons covalentes entre les nanofibres de gélatine dans le matériau non tissé nanofibreux, et pour obtenir le matériau non tissé nanofibreux.

2. Procédé selon l'une quelconque des revendications précédentes, dans lequel le procédé comprend en outre la stratification d'au moins une couche du matériau non tissé nanofibreux avec au moins une couche d'un matériau de renforcement, dans lequel le matériau de renforcement est au moins l'un parmi bois, contreplaqué, plastique, céramique, coton, gaze de coton.

3. Matériau non tissé nanofibreux comprenant des nanofibres de gélatine réticulées et des vides remplis entre les nanofibres de gélatine réticulées.

4. Matériau non tissé nanofibreux selon la revendication 3, dans lequel le matériau non tissé nanofibreux comprend les nanofibres de gélatine traitées par réticulation physique, dans lequel, pour la réticulation physique, un stimulus physique est choisi dans un groupe de stimuli physiques comprenant une irradiation par faisceau d'électrons, un traitement par plasma, un traitement thermique.

5. Matériau non tissé nanofibreux selon l'une quelconque des revendications 3 et 4, dans lequel un diamètre moyen pondéré des nanofibres de gélatine fait de 20 nm à 2 000 nm.

6. Matériau non tissé nanofibreux selon l'une quelconque des revendications 3 à 5, dans lequel le matériau non tissé nanofibreux comprend en outre au moins une couche de matériau de renforcement en tant que stratification.

7. Utilisation du matériau non tissé nanofibreux selon l'une quelconque des revendications 3 à 6 permettant de fabriquer un matériau non tissé semblable à du cuir pour des applications textiles, de mode, de décoration intérieure, automobiles, de conditionnement ; des biomatériaux pour des applications de dentisterie, de soin des plaies, de culture cellulaire ; des produits de filtration d'air.
